(19) Europäisches Patentamt / European Patent Office / Office européen des brevets

(11) **EP 3 337 320 B1**

(12) **EUROPÄISCHE PATENTSCHRIFT**

(45) Veröffentlichungstag und Bekanntmachung des Hinweises auf die Patenterteilung:
**26.02.2025 Patentblatt 2025/09**

(21) Anmeldenummer: **16750183.2**

(22) Anmeldetag: **11.08.2016**

(51) Internationale Patentklassifikation (IPC):
**A01N 37/02** *(2006.01)*   **A01N 37/10** *(2006.01)*
**A01N 37/36** *(2006.01)*   **A01P 1/00** *(2006.01)*

(52) Gemeinsame Patentklassifikation (CPC):
(C-Sets verfügbar)
**A01N 37/02; A01N 37/10; A01N 37/36**   (Forts.)

(86) Internationale Anmeldenummer:
**PCT/EP2016/069115**

(87) Internationale Veröffentlichungsnummer:
**WO 2017/029183 (23.02.2017 Gazette 2017/08)**

(54) **DESINFEKTIONSMITTEL MIT ORGANISCHEN SÄUREN**

DISINFECTANT HAVING ORGANIC ACIDS

AGENT DÉSINFECTANT CONTENANT DES ACIDES ORGANIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.08.2015 DE 102015113641**

(43) Veröffentlichungstag der Anmeldung:
**27.06.2018 Patentblatt 2018/26**

(73) Patentinhaber: **Bode Chemie GmbH**
**22525 Hamburg (DE)**

(72) Erfinder:
• **LINKE, Christoph**
  **22767 Hamburg (DE)**
• **DR. GERDES, Herta**
  **20359 Hamburg (DE)**

(74) Vertreter: **Bardehle Pagenberg Partnerschaft mbB**
**Patentanwälte Rechtsanwälte**
**Prinzregentenplatz 7**
**81675 München (DE)**

(56) Entgegenhaltungen:
EP-A1- 1 110 452          WO-A1-2012/061920
WO-A1-2014/100204      WO-A1-2015/036433
WO-A1-99/44444          DE-A1- 19 710 127
US-A1- 2011 028 550    US-A1- 2012 252 893

• MURPHY R Y ET AL: "Combining organic acid treatment with steam pasteurization to eliminate Listeria monocytogenes on fully cooked frankfurters", JOURNAL OF FOOD PROTECTION, INTERNATIONAL ASSOCIATION FOR FOOD PROTECTION, US, vol. 69, no. 1, 1 January 2006 (2006-01-01), pages 47 - 52, XP002603834, ISSN: 0362-028X

Bemerkungen:
Die Akte enthält technische Angaben, die nach dem Eingang der Anmeldung eingereicht wurden und die nicht in dieser Patentschrift enthalten sind.

(52) Gemeinsame Patentklassifikation (CPC): (Forts.)

C-Sets
**A01N 37/02, A01N 37/02, A01N 37/10, A01N 37/36;**
**A01N 37/10, A01N 37/36;**
**A01N 37/36, A01N 37/36**

**Beschreibung**

Gegenstand der Erfindung ist ein Konzentrat zur Herstellung eines Desinfektionsmittels zur Desinfektion unbelebter Oberflächen und ein Verfahren zur Herstellung des wässrigen Desinfektionsmittels durch Verdünnung des Desinfektionsmittelkonzentrats

Desinfektionsmittel für unbelebte Oberflächen müssen eine Vielzahl von Anforderungen erfüllen. Zum einen ist es wichtig, dass sie eine gute antimikrobielle Wirksamkeit zeigen, zum anderen dürfen sie die Materialien, auf denen die Desinfektion stattfindet, nicht angreifen. Zudem ist innerhalb der letzten Jahre der Gesundheitsaspekt von Desinfektionswirkstoffen immer wichtiger geworden.

Potente Wirkstoffe mit breitem Wirksamkeitsspektrum, wie quartäre Ammoniumverbindungen, Aldehyde, Sauerstoffabspalter als auch Amine sind aufgrund ihrer potentiellen Gefährdung des Anwenders in Verruf geraten und stellen bei übermäßiger Dosierung eine nicht unerhebliche Gefährdung des Menschen dar.

Eine Möglichkeit für toxikologisch unbedenkliche Desinfektionsmittelwirkstoffe stellen organische Säuren dar. Organische Säuren sind mittelstarke bis schwache Carbonsäuren, die mindestens eine Carboxyl-Gruppe aufweisen. In der nahrungsmittelverarbeitenden Industrie haben sich ausgewählte organische Säuren und Salze zur unproblematischen Konservierung von Lebensmitteln durchgesetzt, auch weil eine Vielzahl organischer Säuren natürlichen Ursprungs ist.

Neben der antimikrobiellen Wirkung sind weitere Anwendungsmöglichkeiten für organische Säuren die Verwendung als pH-Regulatoren oder Additive in u.a. Desinfektionsmittelzusammensetzungen und Antiseptika. Anwendung findet sowohl die freie Säure-Form als auch das korrespondierende Salz, wobei für den Fachmann selbstverständlich ist, dass beide in einander überführt werden können.

Einzelne organische Säuren, zeigen gemäß Wallhäußer (Wallhäußers Praxis der Sterilisation, Desinfektion, Antiseptik und Konservierung; Qualitätssicherung der Hygiene in Industrie, Pharmazie und Medizin; Kramer, Axel; Assadian, Ojan; 2008 Georg Thieme Verlag KG; ISBN 978-3-13-141121-1; Seite 693 - 694 (Essigsäure); Seite 695 - 696 (Milchsäure)) schwache, antimikrobielle Wirksamkeiten in Form von Wachstumshemmungen an spezifischen Bakterien. So liegt die minimale Hemmkonzentration (MHK) von 9% Essigsäure an Staphylococcus aureus bei 72 Stunden Einwirkzeit und eignet sich daher als Konservierungsmittel und Zusatzstoff in Lebensmitteln. Milchsäure, zeigt darüber hinaus bei einer Konzentration von 0,3% einen Reduktionsfaktor > 5 log an S. aureus nach einer Einwirkzeit von 72 Stunden. Es handelt sich allerdings nicht um umfassende Wirksamkeitsbelege gegen Bakterien, sondern um spezifische Einzelwirksamkeiten. Zudem sind hohe Konzentrationen und/oder lange Einwirkzeiten beschrieben, die eine Verwendung von organischen Säuren als alleinige Desinfektionswirkstoffe als unökonomisch und unpraktikabel erscheinen lassen. Resultierend gibt es für die Flächendesinfektion bisher keine Produkte auf dem Markt, die ausschließlich auf organischen Säuren basieren und eine effektive Reduktion an Bakterien, Hefen und optional Mykobakterien in ökonomischen Zeiten schaffen.

Aus der WO 2009/155931 A1 ist eine antimikrobielle Zusammensetzung mit Essigsäure bekannt. Die Zusammensetzung wird zur Reinigung von industriellen oder medizinischen Geräten benutzt. Es wird eine gute Wirksamkeit gegen Bakterien beschrieben. Eine Wirksamkeit gegen andere Mikroorganismen ist nicht offenbart.

Aus der WO-2015/036433 A1 ist eine antimikrobielle Zusammensetzung mit organischen Säuren bekannt. Die Zusammensetzung umfasst (a) eine C6-C12 Fettsäure und (b) eine Mischung aus Propionsäure und Milchsäure. Das Verhältnis von (b) zu (a) muss mind. 8 betragen. Es wird eine gute Wirksamkeit gegen Bakterien beschrieben. Eine Wirksamkeit gegen Candida albicans oder Mykobakterien ist nicht offenbart.

Die EP 0 588 912 B1 beschreibt eine antimikrobielle alkoholische Zusammensetzung aus: (a) 0,05 Gew.-% bis 80 Gew.-% Sorbinsäure, (b) 0,05 Gew.-% bis 80 Gew.-% Benzoesäure und (c) 0,5 Gew.-% bis 5 Gew.-% Milchsäure oder Propionsäure, wobei der Träger 5 Gew.-% bis 40 Gew.-% Ethanol umfasst. Diese alkoholhaltige Formulierung wird als Entkeimer z.B. in Kombination mit Tensiden in Reinigungsmitteln, in Handcremes oder zur Desinfektion von Oberflächen verwendet. Die EP1110452A1 beschreibt ein Desinfektionsmittelkonzentrat enthaltend Benzoesäure, wenigstens ein organisches Lösungsmittel (darunter Glykolen und Glykolethern) und wenigstens eine Säure zur Einstellung eines sauren pH-Wertes, wobei unter den Säuren Essigsäure sowie Propionsäure gelistet werden.

Aufgabe der vorliegenden Erfindung ist es daher, ein Desinfektionsmittel für unbelebte Oberflächen herzustellen, das eine ausreichende antimikrobielle Wirksamkeit schon bei kurzen Einwirkzeiten bei niedrigen Konzentrationen in der Anwendungslösung hat und für den Anwender ungefährlich ist. Die Wirksamkeit des Desinfektionsmittels muss ohne erhöhte Temperaturen gegeben sein, bei gleichzeitiger Wirksamkeit gegen Hefen, wie *Candida albicans* und Bakterien, wie *Staphylococcus aureus,* optional Mykobakterien, wie *Mycobacterium terrae.* Zudem soll das Desinfektionsmittel ohne toxikologisch bedenkliche Wirkstoffe auskommen. Das Desinfektionsmittel soll außerdem eine gute Materialverträglichkeit zeigen.

Die Aufgabe wird erfindungsgemäß gelöst durch ein Desinfektionsmittelkonzentrat zur Herstellung eines Desinfektionsmittels zur Desinfektion unbelebter Oberflächen gemäß Patentanspruch 1.

Weitere Ausführungsformen sind Gegenstand der Unteransprüche oder nachfolgend beschrieben.

Eine antimikrobielle Zusammensetzung im Sinne der Erfindung ist hierbei eine Zusammensetzung, die mindestens eine log 4 Reduktion gegenüber *Candida albicans* und eine log 5 Reduktion gegenüber *Staphylococcus aureus* gemäß den "Standardmethoden der DGHM zur Prüfung chemischer Desinfektionsverfahren" (Stand 1. September 2001) im quantitativen Suspensionsversuch erreicht. Besonders geeignete antimikrobielle Zusammensetzungen im Sinne der Erfindung sind solche, die zusätzlich mindestens eine log 4 Reduktion gegenüber *Mycobacterium terrae* bewirken. Als unbelebte Oberflächen versteht der Fachmann solche, die von Natur aus nicht mit Bakterien besiedelt sind. Typische unbelebte Oberflächen sind Fußböden, medizinisches Instrumentarium, wie Überwachungsmonitore, aber auch Patienten-nahe Bereiche wie Krankenliegen, Betttische und Ablageflächen. Dem gegenüber stehen belebte Oberflächen, wie Hände und Haut, bei denen neben der Wirksamkeit die Unbedenklichkeit zur Verwendung am Menschen von großer Bedeutung ist. Folglich müssen Desinfektionsmittel für unbelebte Oberflächen eine gute Materialverträglichkeit gegen u.a. empfindliche Kunststoffe, Polymere und Metalle aufweisen. Die Häufigkeit und der Umfang der Desinfektion von unbelebten Oberflächen sind abhängig vom Risikopotential. Das Robert-Koch-Institut (RKI) unterscheidet zwischen routinemäßiger, täglicher Desinfektion am Krankenbett und gezielter Flächendesinfektion in besonderen Situationen.

Das Desinfektionsmittel enthält keine organischen Säuren außer Essigsäure, Milchsäure, Propionsäure, Natriumbenzoat oder Mischungen hiervon. Es können auch die Natrium- und Kaliumsalze der Säuren genutzt werden, um den pH-Wert der Lösung zu puffern. Das Desinfektionsmittel enthält eine Kombination ausgewählt aus Essigsäure, Propionsäure, Milchsäure und Natriumbenzoat und insbesondere sind keine Sorbinsäure, und keine C6-C12 Fettsäuren enthalten.

Alle für die organischen Säuren angegebenen Konzentrationen beziehen sich jeweils auf 100% Säure, sofern nicht anders angeben. Bevorzugt wird erfindungsgemäß bei der Herstellung der Desinfektionsmittelzusammensetzungen handelsübliche 90 %ige Milchsäure, 99%ige Propionsäure, 99%iges Natriumbenzoat und 100%ige Essigsäure verwendet.

Anstelle der freien Säure kann der Desinfektionsmittelzusammensetzung auch das Salz einer organischen Säure zugesetzt werden. Dieses hat den Vorteil, dass ohne weitere pH-Regulatoren der pH-Wert reguliert werden kann. Zudem besteht die Möglichkeit, durch Zugabe einer starken Säure, z.B. Salzsäure oder Schwefelsäure die freie Säure aus einem Salz herzustellen.

Im Desinfektionsmittel liegen die einzelnen Komponenten, wenn sie enthalten sind, bevorzugt in den folgenden Mengen vor.

| | |
|---|---|
| Milchsäure | 0,05 - 3 Gew.-%, bevorzugt 0,5 -1,5 Gew.-% |
| Essigsäure | 0,1 - 5 Gew.-%, 0,5 - 3 Gew.-% |
| Propionsäure | 0,1 - 5 Gew.-%, 0,5 - 3 Gew.-% |
| Natriumbenzoat | 0,1 - 2 Gew.-%, 0,1 - 1 Gew.-% |
| Propylenglykol | 0,1 - 3 Gew.-%, 0,2 - 1 Gew.-% |
| Hexylcarbitol | 0,1 - 3 Gew.-%, 0,2 -1 Gew.-% |

Das Desinfektionsmittel liegt bevorzugt als anwendungsfertige, wässrige Lösung zur Desinfektion (Anwendungslösung) vor. Die Anwendungslösung wird durch Verdünnung eines erfindungsgemäßen Desinfektionsmittelkonzentrats mit Wasser hergestellt. Dabei enthält das Desinfektionsmittel bevorzugt 0,1 bis 10 Gew-%, besonders bevorzugt 0,5 bis 8,0 Gew.-%, weiterhin besonders bevorzugt 2,0 bis 6,0 Gew.-% des Konzentrats und Wasser.

Das erfindungsgemäße Desinfektionsmittelkonzentrat besteht aus

- 15-45 Gew.-% mind. zweier organischen Säure, ausgewählt aus Essigsäure, Propionsäure, Milchsäure oder einer Kombination dieser,
- 6-13 Gew.-% Natriumbenzoat
- Hilfsstoffen, wie z.B. Lösungsvermittlern und pH-Regulatoren
- Wasser,

wobei sich die Komponenten zu 100 Gew.-% ergänzen.

Erfindungsgemäß enthält das Desinfektionsmittel als antimikrobiellen Wirkstoff folgende Kombinationen organischer Säuren, wobei keine weiteren organischen Säuren enthalten sind:

Kombination A:     Propionsäure, Milchsäure, Natriumbenzoat
Kombination D:     Essigsäure, Milchsäure, Natriumbenzoat
Kombination E:     Propionsäure, Milchsäure, Essigsäure, Natriumbenzoat

Besonders bevorzugte Ausführungsformen des erfindungsgemäßen Konzentrats stellen folgende Zusammensetzungen dar:

| Konzentrate | [%] | [%] |
|---|---|---|
| Milchsäure | 15 | 1 |
| Weinsäure | - | - |
| Essigsäure | 15 | 5 |
| Propionsäure | 15 | 15 |
| Natriumbenzoat | 6 | 13 |
| Natriumacetat | - | |
| Propylenglykol | 10 | 10 |
| Hexylcarbitol | 10 | 10 |
| VE-Wasser | 29 | 46 |
| lineares Alkoholethoxylat* | | - |
| * Marlipal 1618/25, nichtionisches Tensid hergestellt von Sasol Germany GmbH | | |

Das Desinfektionsmittel hat bevorzugt einen pH-Wert von 1,0 bis 7,0, besonders bevorzugt $\geq 2,0 - \leq 6,0$. Der pH-Wert kann durch Zugabe von geringen Mengen pH-Regulatoren, wie starken Basen oder starken Säuren, z.B. Schwefelsäure, Kaliumhydroxid, Natriumsulfit eingestellt werden. Bevorzugt wird auf die Verwendung eines pH-Regulators verzichtet.

Die erfindungsgemäßen Desinfektionsmittelkonzentrate können als Hilfsstoffe Lösungsvermittler und/oder pH-Regulatoren und/oder Tenside enthalten. Geeignete Lösungsvermittler sind Diethylenglykolmono-n-hexylether (Hexylcarbitol) und/oder 1,2-Propandiol (Propylenglykol), ebenso wie Methylcarbitol, Butylcarbitol, Monoethylenglykol. Weitere Hilfsstoffe, die erfindungsgemäß weniger bevorzugt sind, sind Korrosionsinhibitoren, Schaumregulatoren, Dispergiermittel, Farbstoffe, Parfüm oder Mischungen hiervon.

Hexylcarbitol und/oder Propylenglykol werden bevorzugt bei schwach saurem pH-Wert bei wässrigen Desinfektionsmitteln mit Natriumbenzoat eingesetzt. Das Mengenverhältnis von Natriumbenzoat zu Hexylcarbitol liegt bevorzugt zwischen 4:1 und 1:4, besonders bevorzugt 3:1. Wenn Propylenglykol verwendet wird, liegt das Mengenverhältnis von Natriumbenzoat zu Propylenglykol zwischen 4:1 und 1:4, besonders bevorzugt 1:1,5. Besonders bevorzugt ist die Kombination von Hexylcarbitol mit Propylenglykol bei Anwesenheit von Natriumbenzoat in einem bevorzugten Verhältnis Natriumbenzoat : Hexylcarbitol : Propylenglykol = 3/1/5 oder 3/5/5. Weitere Lösungsvermittler, die bei pH < 7,0 eingesetzt werden können, sind: Methylcarbitol, Butylcarbitol, Monoethylenglykol und Kombinationen dieser.

Die Desinfektionsmittel und die erfindungsgemäßen Desinfektionsmittelkonzentrate enthalten als Lösungsvermittler Glykole, ausgewählt aus Propylenglykol und Monoethylenglykol und/oder Glykolether, ausgewählt aus Methylcarbitol, Butylcarbitol und Hexylcarbitol, besonders bevorzugt eine Kombination aus Propylenglykol und Hexylcarbitol.

Bevorzugt enthalten die Desinfektionsmittel und die erfindungsgemäßen Desinfektionsmittelkonzentrate als einzigen antimikrobiellen Wirkstoff organische Säuren und keine weiteren antimikrobiellen Wirkstoffe. Besonders bevorzugt enthalten die erfindungsgemäßen Desinfektionsmittel keine quartären Ammoniumverbindungen, keine Aldehyde, keine Guanidine, kein Aktivchlor, keine Amine, keine Sauerstoffabspalter, keine einwertigen Alkohole, keine aromatischen Alkohole, keine Metallionen und keine Kombinationen dieser antimikrobiellen Wirkstoffe.

Überraschenderweise kann mit dem Desinfektionsmittel nur durch Zugabe organischer Säuren ohne weitere antimikrobielle Wirkstoffe bereits nach zwei Minuten, fünf Minuten oder 15 Minuten eine ausreichende mikrobiozide Wirksamkeit gegen ein breites Spektrum an Mikroorganismen erzielt werden. Die erfindungsgemäße Kombination mehrerer organischer Säuren stellt zudem durch unterschiedlich kombinierte Wirkmechanismen überraschenderweise eine synergistische Zusammensetzung dar und ermöglicht eine ausreichende, keimtötende Wirkung.

Die Liste organische Säuren, die als Wirkstoffe von Desinfektionszusammensetzungen geeignet sind, umfasst: Ameisensäure, Ascorbinsäure, Benzoesäure, Dehydracetsäure, Essigsäure, Fumarsäure, Glykolsäure, Milchsäure, Mandelsäure, Phenylessigsäure, Propionsäure, Salicylsäure, Weinsäure, Zinkstearinsäure, Zitronensäure, jeweils vorliegend als freie Säure, Salz und in beliebiger Kombination, bevorzugt Essigsäure, Milchsäure, Propionsäure, Weinsäure, Natriumbenzoat/Benzoesäure oder Mischungen hiervon. Bevorzugt enthalten die erfindungsgemäßen Desinfektionsmittelkonzentrate organischen Säuren, die 2 bis 8 C-Atome, bevorzugt 3 bis 7 C-Atome, aufweisen.

In einer Ausführungsform enthalten die Desinfektionsmittel und die erfindungsgemäßen Desinfektionsmittelkonzentrate zusätzlich nichtionische Tenside, kationische Tenside, amphotere Tenside, oder eine Kombination dieser, und vorzugsweise keine anionischen Tenside.

Es gibt viele Verbindungen, die zur Gruppe der organischen Säuren zählen und die sich in Struktur als auch Wirkweise unterscheiden können. Eine Möglichkeit, organische Säuren zu charakterisieren, ist der Dissoziationsgrad im wässrigen Medium. Die Dissoziationskonstante einer organischen Säure (Ks) nimmt mit zunehmender Kettenlänge ab, die Säure dissoziiert schwächer.

Organische Säuren können durch ihre Säure-Funktion als auch ihre Struktur antimikrobiell wirken. Eine langkettige Fettsäure kann demnach durch ihren hydrophilen und hydrophoben Molekülteil auch als oberflächenaktive Substanz, vergleichbar mit Tensiden, antimikrobiellen Charakter aufweisen, während eine kurzkettige Säure durch die pH Absenkung wirken kann. Die Säurestärke kann aus dem pKa-Wert abgeleitet werden. Der pKa (auch: pKs) entspricht dem negativen dekadischen Logarithmus der Säurekonstante Ks und liefert Informationen über die Gleichgewichtslage einer Säure, die mit Wasser reagiert. Der pKa dient daher als Maß für die Stärke einer Säure, wobei ein kleiner Wert für eine starke Säure steht.

Das Desinfektionsmittel und das erfindungsgemäße Desinfektionsmittelkonzentrat weisen als antimikrobiellen Wirkstoff (aktive Komponente) ausschließlich organische Säuren mit einem pka-Wert zwischen 2 und 6 auf, bevorzugt mit einem pka-Wert zwischen 3 und 5.

Die erfindungsgemäß bevorzugten organischen Säuren haben folgende pka Werte (bei 20°C)

| | |
|---|---|
| pka Milchsäure: | 3,87 |
| pka Benzoesäure: | 4,17 |
| pka Essigsäure: | 4,76 |
| pka Propionsäure: | 4,88. |

Die organischen Säuren in Kombination können überraschenderweise erfindungsgemäß effektiv gegen Mikroorganismen eingesetzt werden, da sich offenbar folgende Wirkmechanismen synergistisch kumulieren:

(1) Wirkung durch Absenkung des pH-Werts durch Dissoziation der organischen Säure. $R\text{-}COOH + H_2O \rightarrow R\text{-}COO^- + H_3O^+$. Grund: Jeder Mikroorganismus hat seine Kardinalbedingungen, ändert man diese - bspw. den pH-Wert - nimmt die Wachstumsrate (bis zur Hemmung) ab.

(2) Wirkung durch Anlagerung des Säure-Anions an die Zellmembran des Mikroorganismus. $R\text{-}COO^- \rightarrow$ Zellwand/Phospholipidmembran. Grund: Störung der Zellproliferation und Gleichgewichtskonzentration zwischen intra- und extrazellulärem Raum. Eine Annahme besagt, dass sich die langkettigen Fettsäuren-Anionen zwischen die Phospholipid-Moleküle legen, ab einer gewissen Konzentration statistisch nahe genug aneinander liegen, dass sie durch ihre $COO^-$-Gruppen die Membranmoleküle auseinanderschieben und so quasi zur Perforation der Zellmembran beitragen.

(3) Intrazelluläre Wirkung: Die undissoziierte Säure (R-COOH) kann aufgrund einer fehlenden Hydrathülle die Zellwand eines Mikroorganismus leichter passieren als das zugehörige Anion. Im inneren des Organismus herrscht ein höherer pH-Wert, wodurch die Säureaktivität freigesetzt wird - vergleichbar mit (1) - was zur Denaturierung von wichtigen Proteinen und weiteren unspezifischen Reaktionen innerhalb des Organismus führt.

(4) Einige aromatische Carbonsäuren können über ihr Redoxpotential als Depolarisatoren wirken, indem sie z.B. Ionenkanäle der Zelle inhibieren und so zu einer Ladungsumkehr führen können.

Bei der Herstellung der erfindungsgemäßen Konzentrate zeigte sich ein weiterer unerwarteter Effekt. In Gegenwart einer stärkeren Säure, weist Natriumbenzoat keine Löslichkeit in wässriger, glykolhaltiger Lösung auf. Überraschenderweise zeigt sich, dass Natriumbenzoat in Gegenwart von schwächeren Säuren auch bei Anwesenheit von stärkerer Säure und niedrigen pH Werten, ohne Probleme zu einer farblosen und klaren Zusammensetzung gelöst werden kann. Dieses ist überraschend, da die Anwesenheit von stärkerer Säure zu einer Protonierung des Benzoats führt, wodurch die schlecht wasserlösliche Benzoesäure vorliegt. Die Anwesenheit von mind. einer schwächeren Säure reicht aus, um Natriumbenzoat in eine stabile, wässrige, farblose Lösung zu bringen.

In einer weiteren bevorzugten Ausführungsform besteht die Anwendungslösung aus

a) 0,45-10 Gew.-% mind. einer organischen Säure, ausgewählt aus Essigsäure, Propionsäure oder eine Kombination dieser,
b) 0,1-1 Gew.-% Natriumbenzoat,
c) 0,1-1 Gew.-% Milchsäure,
d) 0-2 Gew.-% Lösungsvermittler, ausgewählt aus Hexylcarbitol und Propylenglykol oder eine Kombination dieser und

e) Wasser,

wobei die Summe aus $\dfrac{(a)}{10} + (c) < 1{,}0$ ist.

In einer bevorzugten Ausführungsform besteht die Anwendungslösung aus

a) 0,45-10 Gew.-% mind. einer organischen Säure, ausgewählt aus Essigsäure, Propionsäure oder eine Kombination dieser,

b) 0,1-1 Gew.-% Natriumbenzoat,

c) ggf. 0,1-1 Gew.-% Milchsäure,

d) 0-2 Gew.-% Lösungsvermittler, ausgewählt aus Hexylcarbitol und Propylenglykol oder eine Kombination dieser und

e) Wasser,

wobei die Summe aus $\dfrac{(a)}{10} + (c) \; \cancel{+ (d)} < 1{,}0$ ist.

Bevorzugt enthält die Anwendungslösung des Desinfektionsmittels organische Säuren in einer Konzentration von 0,1- 10 Gew.-%, besonders bevorzugt 0,3 - 5,0 Gew.-%.

Insbesondere liegt die Summe von Propionsäure, Essigsäure und Milchsäure in der Anwendungslösung unter 10 Gew.-%.

Besonders bevorzugt erfüllen die organischen Säuren in der Anwendungslösung rechnerisch die folgende Bedingung (Angaben in Gew.-%):

$$\frac{Essigs\ddot{a}ure\; und/oder\; Propions\ddot{a}ure}{10} + \frac{Milchs\ddot{a}ure}{1} \leq 1{,}0$$

Die erfindungsgemäßen Konzentrate weisen mit ihren Kombinationen von organischen Säuren überraschenderweise eine antimikrobielle Wirksamkeit auf, die weit über eine Wachstumshemmung hinaus geht, und zur Herstellung wirksamer Desinfektionsmittel genutzt werden kann, die bereits nach wenigen Minuten eine vollständige Reduktion von Bakterien, Hefen und sogar Mykobakterien aufweisen (Reduktion um mind. 4 log Stufen gegen Hefen und Mykobakterien, mind. 5 log Stufen an Bakterien).

Die erfindungsgemäßen Desinfektionsmittelkonzentrate werden bevorzugt zur Desinfektion von unbelebten Oberflächen, insbesondere zur Reduktion (Abtötung) von Hefen, insbesondere von *Candida albicans,* und/oder Reduktion (Abtötung) von Bakterien, insbesondere von *Staphylococcus aureus,* verwendet. Bevorzugt ist die Verwendung des Desinfektionsmittelkonzentrats oder des Desinfektionsmittels, um innerhalb von 2 Minuten mind. eine log 4 Reduktion gegenüber *Candida albicans* gemäß den "Standardmethoden der DGHM zur Prüfung chemischer Desinfektionsverfahren" (Stand 1. September 2001) im quantitativen Suspensionsversuch zu bewirken. Weiter bevorzugt ist die Verwendung des Desinfektionsmittel oder des Konzentrats, um innerhalb von 2 Minuten mind. eine log 5 Reduktion gegenüber *Staphylococcus aureus* gemäß den "Standardmethoden der DGHM zur Prüfung chemischer Desinfektionsverfahren" (Stand 1. September 2001) im quantitativen Suspensionsversuch zu bewirken. Weiter bevorzugt ist die Verwendung des Desinfektionsmittels oder des Konzentrats, um innerhalb von 15 Minuten, bevorzugt innerhalb von 10 Minuten, weiter bevorzugt innerhalb von 5 Minuten, besonders bevorzugt innerhalb von 2 Minuten mindestens eine log 4 Reduktion gegenüber *Mycobacterium terrae* gemäß den "Standardmethoden der DGHM zur Prüfung chemischer Desinfektionsverfahren" (Stand 1. September 2001) im quantitativen Suspensionsversuch zu bewirken.

Besonders bevorzugt ist die Verwendung des Desinfektionsmittel oder des Konzentrats, um innerhalb von 2 Minuten mind. eine log 4 Reduktion gegenüber *Candida albicans* und innerhalb von 2 Minuten mind. eine log 5 Reduktion gegenüber *Staphylococcus aureus* und innerhalb von 15 Minuten, bevorzugt innerhalb von 10 Minuten, weiter bevorzugt innerhalb von 5 Minuten, besonders bevorzugt innerhalb von 2 Minuten mindestens eine log 4 Reduktion gegenüber *Mycobacterium terrae,* jeweils gemäß den "Standardmethoden der DGHM zur Prüfung chemischer Desinfektionsverfahren" (Stand 1. September 2001) im quantitativen Suspensionsversuch zu bewirken.

Besonders bevorzugt wird das erfindungsgemäße Desinfektionsmittelkonzentrat zur Reduktion der Mikroorganismen S. *aureus* und *C. albicans* verwendet. Die Prüfung auf antimikrobielle Wirksamkeit findet insbesondere bei geringer organischer Belastung statt, d.h. in Anwesenheit von 0,03% Albumin, kann jedoch auch unter hoher organischer Belastung stattfinden, d.h. in Anwesenheit von 0,3% Albumin und 0,3% Schafserythrozyten, wobei auch bei hoher Belastung die gemäß DGHM oder EN-Norm notwendige Reduktion der Keime erzielt wird.

Das erfindungsgemäße Desinfektionsmittelkonzentrat bzw. das Desinfektionsmittel haben den Vorteil, dass sie nicht nur zur Reduktion der aufgeführten Testkeime *M. terrae, C. albicans* und S. *aureus* geeignet sind, sondern gleichzeitig auch andere Mikroorganismen, wie *M. avium, E. coli, P. aeruginosa* und *E. hirae* reduzieren. Es ist daher möglich, mit nur einem Desinfektionsmittel gleichzeitig eine Vielzahl unterschiedlicher Keime zu reduzieren.

Die erfindungsgemäßen Desinfektionsmittelkonzentrate können in Kombination mit einem Substrat (z.B. gebrauchsfertiges Tuch) verwendet werden.

Zudem kann das flüssige Desinfektionsmittel in Form eines vorgetränkten, geeigneten Trägermaterials zur Wischdesinfektion verwendet werden, wobei das Trägermaterial aus synthetischem Kunststoff aus der Gruppe Polyester, Polyamid, Polyurethan, Polyethylen, Polypropylen, Polytetrafluorethylen (PTFE), vorzugsweise Polyester gebildet wird. Das Trägermaterial ist beispielsweise ein Tuch, ein Schwamm oder eine andere Applikationshilfe. Das verwendete Desinfektionsmittel wird bevorzugt in Form eines Schaums, einer Flüssigkeit oder in Form eines mit dem Desinfektionsmittel imprägnierten Tuchs, Schwamms oder anderer Applikationshilfe appliziert. Hierbei kann das Desinfektionsmittel direkt, ohne weitere Verdünnungen, auf die zu behandelnde Fläche gebracht werden.

**Beispiele**

**Herstellung der Konzentrate und Anwendungsverdünnungen**

Es wurden Konzentrate mit den in Tabellen 1 und 2 angegebenen Zusammensetzungen hergestellt. Der erste Schritt der Herstellung umfasste das Vorlegen des Wassers (sofern vorhanden) und der Lösungsvermittler in einem geeigneten Gefäß. Im nächsten Schritt wurden die organischen Säuren zugesetzt. Es zeigte sich, dass Kombinationen flüssiger Säuren ohne Löslichkeitsprobleme zusammengefügt werden können. Bei Verwendung von festen Säuren oder deren Salzen, wie z.B. Benzoesäure, Natriumbenzoat, Natriumacetat und Weinsäure kam es in Kombinationen mit den flüssigen Säuren teilweise zu einer vorübergehenden Trübung der Lösung. Zudem kam es teilweise bei Kombination von Säure und Salzen zu geringer Wärmeentwicklung, weshalb eine langsame Zugabe vorteilhaft ist. Im letzten Schritt wurden, sofern vorhanden, noch Tenside zugesetzt. Anschließend wurde die Zusammensetzung gerührt, bis eine farblose, klare Lösung entstand, die das Konzentrat darstellt. Aus den Konzentraten wurden Anwendungslösungen durch Verdünnung mit Wasser standardisierter Härte (WSH) hergestellt. Diese wurden auf antimikrobielle Wirksamkeit untersucht. Die Konzentrationen der Anwendungslösung sind für die jeweilige Messreihe in den Tabellen 4 bis 9 angegeben.

Es zeigt sich bei der Herstellung der erfindungsgemäßen Desinfektionsmittelkonzentrate ein besonderes Phänomen: In Gegenwart einer stärkeren Säure, weisen Natriumbenzoat und/oder Benzoesäure keine Löslichkeit in wässriger Lösung auf Vergleichsbeispiel A. Überraschenderweise zeigt sich, dass Natriumbenzoat und/oder Benzoesäure in Gegenwart von mind. einer schwächeren Säure, auch bei niedrigen pH Werten, ohne größere Probleme zu einer farblosen und klaren Zusammensetzung in wässriger Lösung gelöst werden kann. Die Beispiele B, C und E zeigen, dass die Anwesenheit von mind. einer schwächeren Säure ausreicht, um Natriumbenzoat und/oder Benzoesäure auch in Gegenwart einer stärkeren Säure in eine stabile, wässrige, farblose Lösung zu bringen.

Tabelle 1: Rezepturen der Konzentrate A bis E in Gew.-%, A,D, E: Vergleichsbeispiele, B, C: erfindungsgemäß

|  | A (Vergleich) | B | C | D (Vergleich) | E |
|---|---|---|---|---|---|
| Milchsäure (90%) | 15,0 | 15,0 | 15,0 | 15,0 | 15,0 |
| Weinsäure (100%) | - | - | - | - | - |
| Essigsäure (100%) | - | - | 15,00 | - | 15,00 |
| Propionsäure | - | 15,00 |  | - | - |
| Natriumbenzoat | 6,0 | 6,0 | 6,0 | - | - |
| Benzoesäure |  |  |  | 6,0 | 6,0 |
| Propylenglykol | 10,0 | 10,0 | 10,0 | 10,0 | 10,0 |
| Hexylcarbitol | 10,0 | 10,0 | 10,0 | 10,0 | 10,0 |
| VE-Wasser | 59,0 | 44,0 | 44,0 | 59,0 | 44,0 |
|  | Unlöslich, zwei Phasen | Löslich, farblos, klar | Löslich, farblos, klar | Unlöslich, zwei Phasen | Löslich, farblos, klar |

In den folgenden Tabellen sind die Konzentrate 6 und 17 erfindungsgemäß.

**Rezepturen**

Tabelle 2 a: Rezepturen der Konzentrate 1 bis 6 in Gew.-%,

| Marlipal® 1618/25: lineares Alkoholethoxylat, Hersteller Sasol Germany | | | | | | |
|---|---|---|---|---|---|---|
| **Beispiel** | **1** | **2** | **3** | **4** | **5** | **6** |
| Milchsäure (90%) | 15,0 | 12,0 | 30,0 | 1,0 | 1,4 | 15,0 |
| Weinsäure (100%) | - | - | - | 1,4 | 2,0 | - |
| Essigsäure (100%) | 44,0 | 42,0 | 44,0 | 9,5 | 5,0 | - |
| Propionsäure | 15,0 | - | - | 9,5 | 5,0 | 15,0 |
| Natriumbenzoat | 6,0 | 6,0 | 6,0 | 0,3 | 0,4 | 6,0 |
| Propylenglykol | 10,0 | 10,0 | 10,0 | 0,4 | 0,4 | 10,0 |
| Hexylcarbitol | 10,0 | 10,0 | 10,0 | 0,4 | 0,4 | 10,0 |
| VE-Wasser | - | 20,0 | - | 77,1 | 85,0 | 44,0 |
| Marlipal® 1618/25 | - | - | - | 0,4 | 0,4 | - |
| pH-Regulatoren | - | - | - | - | - | - |
| *pH-Wert* | *2,63* | *3,10* | *2,50* | *2,20* | *2,23* | *3,57* |

Tabelle 2 b: Rezepturen der Konzentrate 7 bis 12 in Gew.-%,

| Dehydol® 04 DEO: Fettakohol C8 mit ca. 4 mol EO, Hersteller BASF | | | | | | |
|---|---|---|---|---|---|---|
| **Beispiel** | **7** | **8** | **9** | **10** | **11** | **12** |
| Milchsäure (90%) | 15,0 | 15,0 | 10,0 | - | - | 15 |
| Weinsäure (100%) | - | - | - | - | - | - |
| Essigsäure (100%) | 15,0 | 40,0 | - | 15 | 30 | 40 |
| Propionsäure | 15,0 | 15,0 | 40,0 | 15 | 30 | 15 |
| Natriumbenzoat | 6,0 | 6,0 | 6,0 | 6 | 6 | 6 |
| Propylenglykol | 10,0 | 10,0 | 6,0 | 10 | 10 | 10 |
| Hexylcarbitol | 10,0 | 10,0 | 6,0 | 10 | 10 | 10 |
| VE-Wasser | 29,0 | - | 32,0 | 44 | 14 | - |
| Dehydol® 04 DEO | - | 4,0 | - | - | - | 4 |
| pH-Regulatoren | - | - | - | - | - | KOH(50%) |
| *pH-Wert* | *3,34* | *2,64* | *3,52* | *3,96* | *3,43* | *5,06* |
| | | | | | | |

Tabelle 2 c: Rezepturen der Konzentrate 13 bis 18 in Gew.-%,

| Marlipal® 1618/25: lineares Alkoholethoxylat, Hersteller Sasol Germany | | | | | | |
|---|---|---|---|---|---|---|
| Dehydol® 04 DEO: Fettakohol C8 mit ca. 4 mol EO, Hersteller BASF | | | | | | |
| **Beispiel** | **13** | **14** | **15** | **16** | **17** | **18** |
| Milchsäure (90%) | | 15 | 15 | - | 1 | - |
| Weinsäure (100%) | 6 | - | - | - | - | - |
| Essigsäure (100%) | 15 | 40 | 15 | 15 | 5 | 30 |
| Natriumacetat | | - | - | - | - | - |

(fortgesetzt)

| Marlipal® 1618/25: lineares Alkoholethoxylat, Hersteller Sasol Germany | | | | | | |
|---|---|---|---|---|---|---|
| Dehydol® 04 DEO: Fettakohol C8 mit ca. 4 mol EO, Hersteller BASF | | | | | | |
| **Beispiel** | **13** | **14** | **15** | **16** | **17** | **18** |
| Propionsäure | 15 | 15 | 15 | 15 | 15 | 30 |
| Natriumbenzoat | | - | - | 13 | 13 | 6 |
| Propylenglykol | 10 | 10 | 10 | 12 | 10 | 10 |
| Hexylcarbitol | 10 | 10 | 10 | 14 | 10 | 10 |
| VE-Wasser | 44 | 6 | 35 | 31 | 46 | 13,5 |
| Marlipal 1618/25 | - | - | - | - | - | 0,5 |
| Dehydol® 04 DEO | | 4 | | | | |
| pH-Regulatoren | - | KOH(50%) | KOH(50%) | - | - | - |
| pH-Wert | 2,12 | 2,25 | 2,31 | 4,41 | 4,61 | 3,43 |

Tabelle 3a: Rezepturen der nicht erfindungsgemäßen Konzentrate V1 bis V5 in Gew.-%,

| Dehydol® 04 DEO: Fettakohol C8 mit ca. 4 mol EO, Hersteller BASF | | | | | |
|---|---|---|---|---|---|
| Lutensol® ON 110: nichtionisches Tensid mit verzweigtem C10-Alkohol, Hersteller BASF | | | | | |
| **Beispiel** | **V1** | **V2** | **V3** | **V4** | **V5** |
| Milchsäure (90%) | 15 | - | 9,7 | - | - |
| Weinsäure (100%) | - | - | - | 48,5 | - |
| Essigsäure (100%) | - | - | - | - | - |
| Propionsäure | - | 15 | - | - | 97,0 |
| Natriumbenzoat | 6 | 6 | - | - | |
| Propylenglykol | 10 | 10 | 1,0 | 1,0 | 1,0 |
| Hexylcarbitol | 10 | 10 | 1,0 | 1,0 | 1,0 |
| VE-Wasser | 44 | 59 | 87,3 | 48,5 | - |
| Dehydol 04 DEO | - | - | 1,0 | 1,0 | 1,0 |
| Lutensol ON 110 | 15 | - | - | - | - |
| pH-Regulatoren | - | - | - | - | - |
| *pH-Wert* | *3,75* | *4,55* | *1,83* | *0,62* | *1,90* |

Tabelle 3b: Rezepturen der nicht erfindungsgemäßen Konzentrate V6 bis V10 in Gew.-%,

| Dehydol® 04 DEO: Fettakohol C8 mit ca. 4 mol EO, Hersteller BASF | | | | | |
|---|---|---|---|---|---|
| **Beispiel** | **V6** | **V7** | **V8** | **V9** | **V10** |
| Milchsäure (90%) | - | 6,0 | - | - | - |
| Weinsäure (100%) | | - | - | - | - |
| Essigsäure (100%) | 97,0 | - | - | 15 | - |
| Natriumacetat | - | - | - | - | - |
| Propionsäure | - | - | - | 15 | 15 |
| Natriumbenzoat | 1,0 | - | - | - | 13 |
| Propylenglykol | 1,0 | 15 | 15 | 10 | 10 |
| Hexylcarbitol | - | 15 | 15 | 10 | 10 |

(fortgesetzt)

| Dehydol® 04 DEO: Fettakohol C8 mit ca. 4 mol EO, Hersteller BASF | | | | | |
|---|---|---|---|---|---|
| **Beispiel** | **V6** | **V7** | **V8** | **V9** | **V10** |
| VE-Wasser | 1,0 | 34 | 40 | 50 | 52 |
| Dehydol 04 DEO | - | 30 | 30 | - | - |
| pH-Regulatoren | - | - | - | - | - |
| *pH-Wert* | *0,69* | *3,05* | *2,94* | *2,02* | *5,05* |

**Prüfung auf antimikrobielle Wirksamkeit**

Das Desinfektionsmittel bzw. das erfindungsgemäße Desinfektionsmittelkonzentrat bewirkt mindestens eine log 4 Reduktion gegenüber C. albicans gemäß den "Standardmethoden der DGHM zur Prüfung chemischer Desinfektionsverfahren" (Stand 1. September 2001) im quantitativen Suspensionsversuch. Das erfindungsgemäße Desinfektionsmittelkonzentrat bzw. die Anwendungslösung bewirkt mindestens eine log 4 Reduktion gegenüber C.albicans und eine log 5 Reduktion gegenüber S.aureus in weniger als 60 Minuten gemäß den "Standardmethoden der DGHM zur Prüfung chemischer Desinfektionsverfahren" (Stand 1. September 2001) im quantitativen Suspensionsversuch.

Neben den Prüfungen nach DGHM besteht auch die Möglichkeit der Prüfung nach Europäischer Norm (EN) 13624 "Chemische Desinfektionsmittel und Antiseptika - Quantitativer Suspensionsversuch zur Bestimmung der levuroziden Wirkung chemischer Desinfektionsmittel im humanmedizinischen Bereich - Prüfverfahren und Anforderungen (Phase 2, Stufe 1)", dabei ist die Durchführung und Auswertung weitestgehend identisch mit den DGHM Prüfungen.

Die nachfolgenden Tabellen zeigen jeweils die log Stufen Reduktion gegenüber verschiedenen Prüfkeimen bei verschiedenen organischen Belastungen. Geringe organische Belastung entspricht der Anwesenheit von 0,03% Albumin, hohe organische Belastung der Anwesenheit von 0,3% Albumin und 0,3% Schafserythrozyten.

**Candida albicans**

Tabelle 4a: Reduktionsfaktoren von x%igen Anwendungslösungen gegenüber *Candida albicans,* bei verschiedenen organischen Belastungen

| Beispiel | % | 15min | 30min | 45min | 60min | **Organische Belastung** |
|---|---|---|---|---|---|---|
| **1** | 2 | - | < 1,92 | < 1,93 | < 1,93 | Gering |
| | 3 | < 1,93 | 4,46 | > 6,41 | - | |
| **2** | 3 | < 1,79 | < 1,85 | < 1,63 | - | Hoch |
| | 4 | < 1,79 | 2,26 | > 6,11 | - | |
| | 5 | 2,98 | > 6,33 | > 6,11 | - | |
| **3** | 2 | - | < 1,92 | < 1,93 | < 1,93 | Gering |
| | 3 | < 1,93 | 2,47 | 4,03 | - | |
| **4** | 20 | < 1.76 | < 1,78 | - | < 1,82 | Gering |
| | 40 | 5,94 | > 6,26 | - | > 6,30 | |
| **5** | 20 | < 1.76 | < 1,78 | - | < 1,82 | Gering |
| | 40 | < 1.76 | 2,26 | - | > 6,30 | |
| **6** | 3 | < 1,93 | 3,21 | 5,44 | - | Gering |
| | 4 | > 6,41 | > 6,42 | > 6,44 | - | |
| | 5 | > 6,41 | > 6,42 | > 6,44 | - | |

(fortgesetzt)

| Beispiel | % | 15min | 30min | 45min | 60min | Organische Belastung |
|---|---|---|---|---|---|---|
| 7 | 3 | 4,44 | > 6,42 | > 6,44 | - | Gering |
| | 4 | > 6,41 | > 6,42 | > 6,44 | - | |
| | 5 | > 6,41 | > 6,42 | > 6,44 | - | |
| 8 | 3 | 3,43 | > 6,42 | > 6,44 | - | Gering |
| | 4 | > 6,41 | > 6,42 | > 6,44 | - | |
| | 5 | > 6,41 | > 6,42 | > 6,44 | - | |
| V1 | 3 | < 1,93 | < 1,94 | < 1,96 | - | Gering |
| | 4 | < 1,93 | < 1,94 | 2,04 | - | |
| | 5 | < 1,93 | 3,11 | 4,63 | - | |
| V2 | 3 | < 1,93 | < 1,94 | < 1,96 | - | Gering |
| | 4 | 2,28 | 4,28 | 5,96 | - | |
| | 5 | > 6,41 | > 6,42 | > 6,44 | - | |
| 9 | 3 | < 1,93 | < 1,94 | 2,98 | - | Gering |
| | 4 | > 6,41 | > 6,42 | > 6,44 | - | |
| | 5 | > 6,41 | > 6,42 | > 6,44 | - | |
| V3 | 5 | < 1,61 | < 1,59 | - | < 1,56 | Gering |
| | 10 | < 1,61 | < 1,59 | - | < 1,56 | |
| V4 | 5 | < 1,61 | < 1,59 | - | < 1,56 | Gering |
| | 10 | < 1,61 | < 1,59 | - | < 1,56 | |
| V5 | 5 | < 1,61 | 2,31 | - | 5,74 | Gering |
| | 10 | > 6,09 | > 6,07 | - | > 6,04 | |
| V6 | 5 | < 1,61 | < 1,59 | - | < 1,56 | Gering |
| | 10 | 5,01 | > 6,07 | - | > 6,04 | |
| V7 | 2 | < 1,78 | < 1,84 | - | - | Hoch |
| | 3 | < 1,78 | < 1,84 | - | - | |
| V8 | 2 | < 1,78 | < 1,84 | - | - | Hoch |
| | 3 | < 1,78 | < 1,84 | - | - | |
| 10 | 3 | < 1,90 | < 1,89 | < 1,90 | - | Gering |
| | 4 | < 1,90 | 2,65 | 4,84 | - | |
| | 5 | > 6,38 | > 6,37 | > 6,38 | - | |
| 11 | 3 | < 1,90 | < 1,89 | < 1,90 | - | Gering |
| | 4 | > 6,38 | > 6,37 | > 6,38 | - | |
| | 5 | > 6,38 | > 6,37 | > 6,38 | - | |
| V9 | 3 | < 1,90 | < 1,89 | < 1,90 | - | Gering |
| | 4 | < 1,90 | < 1,89 | < 1,90 | - | |
| | 5 | < 1,90 | < 1,89 | < 1,90 | - | |
| 15 | 3 | < 1,72 | < 1,70 | < 1,75 | - | Gering |
| | 4 | < 1,72 | < 1,70 | < 1,75 | - | |
| | 5 | < 1,72 | < 1,70 | < 1,75 | - | |

(fortgesetzt)

| Beispiel | % | 15min | 30min | 45min | 60min | Organische Belastung |
|---|---|---|---|---|---|---|
| **V10** | 3 | *< 1,72* | *< 1,70* | *< 1,75* | - | Gering |
| | 4 | *< 1,72* | *< 1,70* | *2,10* | - | |
| | 5 | *> 5,20* | *> 5,18* | *> 5,23* | - | |

**Candida albicans**

Tabelle 4b: Reduktionsfaktoren von x%igen Anwendungslösungen gegenüber *Candida albicans,* bei geringer organischer Belastung

| - | % | 2min | 5min | 15min | - | Organische Belastung |
|---|---|---|---|---|---|---|
| **16** | 5,5 | 4,36 | 4,36 | 5,25 | - | Gering |
| **17** | 4 | < 1.94 | < 1,94 | 2,20 | - | Gering |
| | 5 | 3,85 | 5,52 | > 6,39 | - | |
| | 6 | > 6,42 | > 6,42 | > 6,42 | - | |

*Staphylococcus aureus*

Tabelle 5: Reduktionsfaktoren von x%igen Anwendungslösungen gegenüber *Staphylococcus aureus,* bei verschiedenen organischen Belastungen

| | % | 15min | 30min | 45min | 60min | Organische Belastung |
|---|---|---|---|---|---|---|
| **1** | 2 | - | > 7,21 | > 7,23 | > 7,22 | Gering |
| | 3 | > 7,21 | > 7,13 | > 7,22 | - | |
| **2** | 1 | < 1,68 | 2,61 | 1,05 | - | Hoch |
| | 3 | > 7,16 | > 7,15 | > 7,16 | - | |
| | 5 | > 7,16 | > 7,15 | > 7,16 | - | |
| **3** | 2 | > 7,21 | > 7,23 | - | > 7,22 | Gering |
| | 3 | > 7,18 | > 7,21 | - | > 7,23 | |
| **4** | 5 | < 1,63 | < 1,68 | - | < 1,70 | Gering |
| | 20 | 5,47 | > 7,16 | - | > 7,18 | |
| | 40 | > 7,11 | > 7,16 | - | > 7,18 | |
| **5** | 5 | < 1,63 | < 1,68 | - | < 1,70 | Gering |
| | 20 | 4,64 | 5,27 | - | > 7,18 | |
| | 40 | 6,33 | > 7,16 | - | > 7,18 | |
| **6** | 3 | > 7,32 | > 7,42 | > 7,32 | - | Gering |
| | 4 | > 7,32 | > 7,42 | > 7,32 | - | |
| | 5 | > 7,32 | > 7,42 | > 7,32 | - | |
| **7** | 3 | > 7,32 | > 7,42 | > 7,32 | - | Gering |
| | 4 | > 7,32 | > 7,42 | > 7,32 | - | |
| | 5 | > 7,32 | > 7,42 | > 7,32 | - | |

(fortgesetzt)

|  | | % | 15min | 30min | 45min | 60min | Organische Belastung |
|---|---|---|---|---|---|---|---|
|  | **8** | 3 | > 7,32 | > 7,42 | > 7,32 | - | Gering |
|  |  | 4 | > 7,32 | > 7,42 | > 7,32 | - | |
|  |  | 5 | > 7,32 | > 7,42 | > 7,32 | - | |
|  | **V1** | 3 | 3,03 | 5,14 | 6,42 | - | Gering |
|  |  | 4 | 5,81 | > 7,42 | > 7,32 | - | |
|  |  | 5 | > 7,32 | > 7,42 | > 7,32 | - | |
|  | **V2** | 3 | < 1,84 | < 1,94 | < 1,84 | - | Gering |
|  |  | 4 | < 1,84 | < 1,94 | < 1,84 | - | |
|  |  | 5 | < 1,84 | < 1,94 | < 1,84 | - | |
|  | **9** | 3 | 5,02 | 6,10 | > 7,32 | - | Gering |
|  |  | 4 | > 7,32 | > 7,42 | > 7,32 | - | |
|  |  | 5 | > 7,32 | > 7,42 | > 7,32 | - | |
|  | **V3** | 5 | < 1,26 | < 1,32 | - | < 1,21 | Gering |
|  |  | 10 | 1,90 | 3,15 | - | 4,53 | |
|  | **V4** | 5 | > 6,74 | > 6,80 | - | > 6,69 | Gering |
|  |  | 10 | > 6,74 | > 6,80 | - | > 6,69 | |
|  | **V5** | 5 | 6,36 | > 6,80 | - | > 6,69 | Gering |
|  |  | 10 | > 6,74 | > 6,80 | - | > 6,69 | |
|  | **V6** | 5 | 5,17 | > 6,80 | - | > 6,69 | Gering |
|  |  | 10 | > 6,74 | > 6,80 | - | > 6,69 | |
|  | **V7** | 2 | < 1,65 | < 1,65 | - | - | Hoch |
|  |  | 3 | < 1,65 | < 1,65 | - | - | |
|  | **V8** | 2 | < 1,65 | < 1,65 | - | - | Hoch |
|  |  | 3 | < 1,65 | < 1,65 | - | - | |
|  | **10** | 3 | < 1,73 | 3,87 | > 7,25 | - | Gering |
|  |  | 4 | > 7,21 | > 7,22 | > 7,25 | - | |
|  |  | 5 | > 7,21 | > 7,22 | > 7,25 | - | |
|  | **11** | 3 | 5,73 | 6,74 | > 7,25 | - | Gering |
|  |  | 4 | > 7,21 | > 7,22 | > 7,25 | - | |
|  |  | 5 | > 7,21 | > 7,22 | > 7,25 | - | |
|  | **V9** | 3 | < 1,73 | < 1,74 | < 1,77 | - | Gering |
|  |  | 4 | < 1,73 | < 1,74 | 3,54 | - | |
|  |  | 5 | 2,52 | 4,71 | > 7,25 | - | |
|  | **13** | 3 | < 1,74 | < 1,76 | < 1,77 | - | Gering |
|  |  | 4 | < 2,18 | 5,71 | > 7,25 | - | |
|  |  | 5 | > 7.22 | > 7,24 | > 7,25 | - | |
|  | **15** | 3 | < 1,58 | < 1,50 | < 1,61 | - | Gering |
|  |  | 4 | 5,16 | > 6,98 | > 7,09 | - | |
|  |  | 5 | > 7,06 | > 6,98 | > 7,09 | - | |

(fortgesetzt)

| | % | 15min | 30min | 45min | 60min | Organische Belastung |
|---|---|---|---|---|---|---|
| V10 | 3 | < 1,58 | 1,78 | 3,19 | - | Gering |
| V10 | 4 | 4,15 | > 6,98 | > 7,09 | - | Gering |
| V10 | 5 | > 7,06 | > 6,98 | > 7,09 | - | Gering |
| 14 | 3 | 4,05 | 4,77 | - | - | Gering |
| 14 | 4 | 7,03 | > 7,29 | > 7,29 | - | Gering |

**Staphylococcus aureus**

Tabelle 6: Reduktionsfaktoren von x%igen Anwendungslösungen gegenüber *Staphylococcus aureus,* bei verschiedenen organischen Belastungen

| | % | 2min | 5min | 15min | 30min | Organische Belastung |
|---|---|---|---|---|---|---|
| 9 | 4 | - | > 6,09 | - | - | Gering |
| 9 | 5 | - | > 6,09 | - | - | Gering |
| 16 | 5,5 | 5,05 | 5,49 | 5,75 | - | Gering |

*Mycobacterium terrae*

Tabelle 7: Reduktionsfaktoren von x%igen Anwendungslösungen gegenüber *Mycobacterium terrae,* bei verschiedenen organischen Belastungen

| | % | 15min | 30min | 45min | 60min | **Organische Belastung** |
|---|---|---|---|---|---|---|
| 1 | 2 | < 2,66 | < 2,58 | < 2,69 | - | Gering |
| 1 | 3 | 6,19 | > 7,06 | > 7,17 | - | Gering |
| 1 | 4 | > 7,14 | > 7,06 | > 7,17 | - | Gering |
| 8 | 2 | 3,11 | 6,28 | > 7,17 | - | Gering |
| 8 | 3 | > 7,14 | > 7,06 | > 7,17 | - | Gering |
| 8 | 4 | > 7,14 | > 7,06 | > 7,17 | - | Gering |
| 9 | 2 | < 2,66 | < 2,58 | < 2,69 | - | Gering |
| 9 | 3 | < 2,66 | < 2,58 | < 2,69 | - | Gering |
| 9 | 4 | > 7,14 | > 7,06 | > 7,17 | - | Gering |
| V7 | 2 | < 1,70 | < 1,86 | - | - | Hoch |
| V7 | 3 | < 1,70 | < 1,86 | - | - | Hoch |
| V8 | 2 | < 1,55 | < 1,40 | - | - | Hoch |
| V8 | 3 | < 1,55 | < 1,40 | - | - | Hoch |
| 12 | 3 | > 5,18 | - | - | | Gering |
| 14 | 3 | 4,95 | > 6,26 | > 6,18 | | Gering |
| 14 | 5 | > 6,18 | > 6,26 | > 6,18 | | Gering |
| 15 | 3 | < 1,71 | < 1,57 | < 1,65 | - | Gering |
| 15 | 5 | 2,00 | 4,30 | > 6,13 | - | Gering |

(fortgesetzt)

| | % | 15min | 30min | 45min | 60min | Organische Belastung |
|---|---|---|---|---|---|---|
| **V10** | 3 | < 1,71 | < 1,57 | 3,04 | - | Gering |
| | 5 | > 6,19 | > 6,05 | > 6,13 | - | |

**Pseudomonas aeruginosa**

Tabelle 8: Reduktionsfaktoren von x%igen Anwendungslösungen gegenüber *Pseudomonas aeruginosa,* bei verschiedenen organischen Belastungen

| | % | 15min | 30min | 45min | 60min | Organische Belastung |
|---|---|---|---|---|---|---|
| **1** | 2 | - | > 7,01 | > 7,05 | >7,06 | Gering |
| | 3 | > 7,01 | > 7,05 | >7,06 | - | |
| **3** | 2 | - | > 7,01 | > 7,05 | >7,06 | Gering |
| | 3 | > 7,01 | > 7,05 | >7,06 | - | |
| **V7** | 1 | 5,51 | 5,49 | - | - | Hoch |
| | 2 | > 7,53 | > 7,49 | - | - | |
| **V8** | 1 | < 2,05 | < 2,01 | - | - | Hoch |
| | 2 | < 2,05 | < 2,01 | - | - | |

**Escherichia coli**

Tabelle 9: Reduktionsfaktoren von x%igen Anwendungslösungen gegenüber *Escherichia coli,* bei verschiedenen organischen Belastungen

| | % | 15min | 30min | 45min | 60min | Organische Belastung |
|---|---|---|---|---|---|---|
| **1** | 3 | > 7,24 | > 7,16 | > 7,19 | - | Gering |
| | 4 | > 7,24 | > 7,16 | > 7,19 | - | |
| **V7** | 1 | 4,57 | 5,26 | - | - | Hoch |
| | 2 | > 7,53 | > 7,49 | - | - | |
| **V8** | 1 | < 1,84 | < 1,84 | - | - | Hoch |
| | 2 | < 1,84 | < 1,84 | - | - | |

Beschreibung der Ergebnisse:

Die Daten der Vergleichsbeispiele V7 und V8 zeigen, dass der Zusatz von 6% Milchsäure zu einem Konzentrat, dass als 1%ige Anwendungsverdünnung genutzt wird, entsprechend 0,06% Milchsäure enthält, zwar eine ausreichende Wirksamkeit gegenüber *Escherichia coli* und *Pseudomonas aeruginosa* - auch unter hoher organischer Belastung haben. Allerdings zeigt sich, dass bei dieser Konzentration keine erkennbare Wirksamkeit gegen *Candida albicans, Mycobacterium terrae* und *Staphylococcus aureus* besteht. Es ist ersichtlich, dass *Staphylococcus aureus* und *Candida albicans* und *Mycobacterium terrae* hierbei die limitierenden Keime darstellen.

Eine 5%ige Prüflösung von Vergleichsbeispiel V5 enthält in Anwendungsverdünnung knapp 4,85% Propionsäure und zeigt nach 60 Minuten Einwirkzeit Levurozidie. Zudem weist sie eine ausreichende Wirksamkeit gegenüber *Staphylococcus aureus* bei 15 Minuten Einwirkzeit auf. Die Zusammensetzung enthält als Aktivstoff nur Propionsäure, um eine bessere Benetzung der Mikroorganismen zu erzielen, ist eine geringe Menge an Lösungsvermittler und nichtionisches Tensid zugesetzt. Aufgrund der Daten aus Vergleichsbeispiel V7 und V8 kann ausgeschlossen werden, dass der Lösungsvermittler und das Tensid den antimikrobiellen Effekt hervorrufen.

Gemäß Literatur [S.Block; Disinfection, Sterilisation, and Preservation; 4. Ausgabe; ISBN 0-8121-1364-0; S.807 ff.] besteht bei Propionsäure keine Wirksamkeit gegen Hefen - diese sei eher kontraproduktiv, da eine Vielzahl an Hefen Propionsäure als Nährstoff verstoffwechselt. Zudem bestehe schlechte Wirksamkeit gegen Bakterien, mit Ausnahme *von Bacillus mesentericus.* Analog hierzu ist V6, eine Essigsäurezusammensetzung, die in Prüfkonzentration knapp 4,85% Essigsäure aufweist, sowie eine geringen Menge an nichtionischem Tensid und Lösungsvermittler. Es zeigt sich zwar eine ausreichende Wirksamkeit gegen *Staphylococcus aureus* nach 15 Minuten, es deutet sich bei dieser Menge Essigsäure aber keine Wirksamkeit gegenüber *Candida albicans* an.

Vergleichsbeispiel V2 ist eine Kombination aus 6% Natriumbenzoat und 15% Propionsäure, die als 4%ige Anwendungsverdünnung nach 30 Minuten levurozide Wirksamkeit aufweist. Um eine bessere Löslichkeit im Wasser herzustellen, befindet sich eine geringe Menge an Lösungsvermittler in der Zusammensetzung. Es ist für den Fachmann nicht ersichtlich, dass eine 0,24%ige Lösung Natriumbenzoat bereits in 30 Minuten eine ausreichende Levurozide Wirksamkeit aufweist. Gemäß Literatur (Walhäußers et. al. ; Praxis der Sterilisation, Desinfektion, Antiseptik und Konservierung; ISBN 978-3-13-141121-1; Seite 700 ff.) wirkt eine Anwendungslösung von 0,12% Natriumbenzoat in 72 Stunden mikrobizid gegenüber C.albicans (MMK > 5log, 1200μg/ml). Es kann als ausgeschlossen angesehen werden, dass eine Verdopplung der Konzentration von 0,12% auf 0,24% zu einer Verringerung der Einwirkzeit von 72h auf 30 min (0,7% der Einwirkzeit) führt. Gemäß oben aufgeführter Literatur zeigt zudem Propionsäure keine Wirksamkeit an Candida albicans. Es muss sich demnach um einen Synergismus gegenüber Candida albicans, der durch Verwendung der beiden Carbonsäuren Natriumbenzoat und Propionsäure zustande kommt, handeln. Diese Rezeptur belegt allerdings bei den gewählten Prüfbedienungen keine Wirksamkeit gegenüber *Staphylococcus aureus.*

Der Vergleich von Vergleichsbeispiel V2 zu Beispiel 6 zeigt, dass der Zusatz von 15% Milchsäure zum Konzentrat, was bei einer 3%igen Lösung einer Konzentration von 0,45% entspricht, eine signifikante Verbesserung der Levurozidie, als auch eine Wirksamkeit gegenüber *Staphylococcus aureus* bewirkt. Hiermit bestätigt sich die Vermutung des steigerbaren Synergismus, da die Vergleichsbeispiele V7 und V8 nicht ersichtlich machen, dass Milchsäure zu einer Wirksamkeit gegenüber S. aureus oder C. albicans beiträgt. Diese Wirksamkeitssteigerung ist erstaunlich, da Vergleichsbeispiel V3 zeigt, dass eine Anwendungslösung mit 0,97% Milchsäure keine Wirksamkeit an *Candida albicans* und keine ausreichende Wirksamkeit gegenüber S. aureus hat. Bestätigt wird diese Annahme zudem durch den Vergleich von V9 zu Beispiel 15. Hier zeigt sich ebenfalls, dass der Zusatz von 0,6% Milchsäure in Anwendungslösung zu einer Zusammensetzung mit gleicher Menge Propion- und Essigsäure, eine signifikante Wirksamkeitssteigerung an *Staphylococcus aureus* bewirkt.

Der Vergleich von Vergleichsbeispiel V2 zu Beispiel 10 zeigt, dass auch der Zusatz von 15% Essigsäure zu Natriumbenzoat und Propionsäure eine signifikante Wirksamkeitssteigerung an S. aureus bewirkt.

Der Vergleich von Beispiel 10 zu Beispiel 11 zeigt, dass durch weiteren Zusatz von Essigsäure und Propionsäure zudem die Wirksamkeit gegen S. aureus noch weiter gesteigert werden kann: Beispiel 10 zeigt bei 3%iger Anwendung innerhalb von 30 Minuten keine ausreichende Reduktion von S. aureus, während Beispiel 11 bereits nach 15 min. einen Reduktionsfaktor von RF > 7 aufweist.

Der Vergleich von Vergleichsbeispiel V2 zu Vergleichsbeispiel V10 zeigt, welche Auswirkung eine Erhöhung des Gehalts an Natriumbenzoat hat. Obwohl die Konzentration des Natriumbenzoats in Vergleichsbeispiel 10 mehr als doppelt so hoch als in Vergleichsbeispiel V2 liegt, findet keine Verbesserung der Wirksamkeit an *Candida albicans* statt, im Gegenteil kommt es zu einer Verschlechterung. Dies belegt die Vermutung der synergistischen Zusammensetzung durch Anwesenheit von mind. drei Carbonsäuren. Interessant ist an Vergleichsbeispiel V2 und Vergleichsbeispiel 10 der pH-Wert der Zusammensetzung. Dieser liegt über dem pka-Wert der Benzoesäure von 4,22. Es kann daher auf die Wirksamkeit des Natriumbenzoats und nicht der Benzoesäure geschlossen werden.

Dieses wird zudem durch die antimikrobiellen Daten von -Beispiel 8 und Beispiel 12 deutlich, da hier lediglich eine pH-Korrektur vorgenommen wurde und beide Rezepturen den maximalen Reduktionsfaktor gegen *Mycobacterium terrae* bei 3% und einer Einwirkzeit von 15 Minuten aufweisen. Die Differenz der beiden Reduktionsfaktoren, RF >7 zu RF >5, ergibt sich aus unterschiedlichen Screenings, bei denen die maximal möglichen Reduktionsfaktoren differierten.

Rezeptur 12 entspricht in der Zusammensetzung Rezeptur 8, wurde aber mit KOH (50%) auf einen erhöhten pH-Wert von > 5,0 titriert, um den Einfluss des pH-Wert auf die antimikrobielle Wirksamkeit zu ermitteln. Der Verbrauch an KOH (50%) betrug hierbei 12,0 g. Da durch die große Menge an pH-Regulator eine Erhöhung der Gesamtmenge der Zusammensetzung von 100g auf 112g stattfand und dies folglich zu einer Reduktion des Anteils der Säuren führt, wurde die Anwendungskonzentration erhöht, um in den jeweiligen Prüflösungen die gleiche Menge an aktiven organischen Säuren zu haben.

Zusammensetzung 8, die einen nativem pH-Wert von 2,64 aufweist, entspricht einer Zusammensetzung mit 100g und wurde als 3%ige Prüflösung getestet. Die pH-veränderte Rezeptur 12 entspricht 112g und wurde folglich als 3,36%ige Zusammensetzung getestet. Um eine bessere Vergleichbarkeit zwischen den Rezepturen und Wirksamkeiten aufzeigen zu können, wurden für Rezeptur 12 die umgerechneten Daten als 100g Konzentrat und entsprechend 3%iger Prüfkonzentrationen aufgeführt.

Rezeptur 14 umfasste einen nativen pH-Wert von 0,86, Rezeptur 15 einen nativen pH-Wert von 1,57. Um einen möglichen Einfluss auf die Wirksamkeit durch abweichende pH-Werte zu minimieren, wurden hier die pH-Werte durch Zusatz von KOH(50%) auf pH 2,25 bzw. pH 2,31 eingestellt. Bei Rezeptur 14 betrug die notwendige Menge an für diesen pH Wert 1g KOH(50%), bei Rezeptur 15 lediglich 0,8g. Die entsprechende Menge VE-Wasser wurde ersetzt, um weiterhin 100g Rezepturen zu haben. Um eine bessere Vergleichbarkeit in der Übersicht darstellen zu können, ist in der Rezepturübersicht die Menge aber als Wasser mit dem Vermerkt eines pH-Regulators aufgeführt.

Die Ergebnisse von Beispiel 3 und Beispiel 1 zeigen, dass durch Austausch von 15% Milchsäure zu 15% Propionsäure eine signifikante Wirksamkeitssteigerung an *Candida albicans* erzielt werden kann. Entscheidend ist hierbei, dass durch diesen Austausch insgesamt vier Säuren und nicht mehr lediglich drei, dafür aber in höheren Mengen, genutzt werden. Dieses wird auch durch die Beispiele 6 und 7 bestätigt:

Durch den Zusatz von 15% Essigsäure wird die Wirksamkeit nochmals signifikant gesteigert, wie der Vergleich der Wirksamkeitsdaten des *Candida albicans* Screenings zeigt. Diese Wirksamkeitssteigerung ist für den Fachmann unerwartet und bestätigt den Synergismus, da Vergleichsbeispiel V6 eine signifikant höhere Konzentration an Essigsäure in Anwendungslösung auch bei höherer Einwirkzeit keine Wirksamkeit gegenüber *Candida albicans* aufweist.

Die Gegenüberstellung von Beispiel 14 und Beispiel 8 belegt, dass der Wirksamkeitssynergismus mit vier Säuren zu einer noch besseren Keimreduktion als drei Säuren führt. Es handelt sich hierbei um eine vergleichbare Zusammensetzung, die sich nur durch einen Anteil von 6% Natriumbenzoat bzw. 6% Wasser unterscheiden. Rezeptur 8, die auf vier Säuren als Wirkstoffen basiert, erzielt innerhalb von 15 Minuten Einwirkzeit bei 3%iger Anwendungskonzentration den maximalen Reduktionsfaktor (RF > 7) an *Mycobacterium terrae* und *Staphylococcus aureus.* Rezeptur 14 zeigt bei dieser niedrigen Konzentration hingegen "lediglich" einen Reduktionsfaktor von 4,95 an *Mycobacterium terrae* und keine ausreichende Wirksamkeit an *Staphylococcus aureus* (RF < 5,0).

Eine Gegenüberstellung der Rezepturen 7 zu 15 mit Wirksamkeitsdaten an *Candida albicans* und *Staphylococcus aureus* bestätigt den oben aufgeführten Befund Der Unterschied der beiden Rezepturen liegt folglich lediglich in 6% Benzoat und die resultierenden Reduktionsfaktoren der Rezeptur 7 mit Essigsäure, Propionsäure, Milchsäure und Natriumbenzoat sind signifikant besser als die von Rezeptur 15 mit Essigsäure, Propionsäure und Milchsäure.

Obwohl die Essigsäure in Beispiel 1 im Vergleich zu Beispiel 7 von 15% auf 44% erhöht wird, scheint die Abwesenheit der 15% Propionsäure den größeren negativen Einfluss auf die Wirksamkeit gegenüber *Candida albicans* zu haben. Zudem bewirkt die Propionsäure einen positiven Einfluss auf die Löslichkeit, wie bereits unter "Herstellung der Konzentrate und Anwendungsverdünnungen" beschrieben.

Die Ergebnisse von Beispiel 1, 8 und 9 zeigen, dass zudem durch die Kombinationen der verwendeten Säuren eine ausreichende Wirksamkeit gegen *Mycobacterium ter*rae erzielt werden kann.

Vergleichsbeispiel V9 enthält lediglich 15% Propionsäure und Essigsäure und zeigt erst als 5%ige Lösung nach 45 Minuten eine ausreichende Wirksamkeit gegenüber S. aureus und bis 5% 45 Minuten keine Wirksamkeit an Candida albicans. Rezeptur 13 entspricht der Zusammensetzung von Vergleichsbeispiel V9, allerdings wurde hierbei 6% Wasser durch Weinsäure ersetzt. Der direkte Vergleich von Beispiel 13 zu V9 an *Staphylococcus aureus* zeigt eine Wirksamkeitssteigerung durch Weinsäurezusatz zur bestehenden Kombination.

Die Rezeptur von V9 mit den beiden Säuren Essigsäure und Propionsäure kann aber auch gut mit Vergleichsbeispiel V2 verglichen werden: Rezeptur V2, bestehend aus 15% Propionsäure und 6% Natriumbenzoat zeigt bei 5%iger Konzentration und 45 Minuten Einwirkzeit überhaupt keine Wirksamkeit gegenüber S. aureus, allerdings ab 4% und 30 Minuten eine ausreichende Wirksamkeit gegenüber Candida albicans. Wenn man nun diese Rezepturen, V9 und V2, kombiniert zu 15% Propionsäure, 15% Essigsäure und 6% Natriumbenzoat, entsprechend Beispiel 10, zeigt sich überraschenderweise eine signifikante Wirksamkeitssteigerung gegenüber S. aureus, wonach bereits eine 3%ige Anwendungsverdünnung nach 45 Minuten Einwirkzeit, bzw. eine 4%ige Anwendungsverdünnung nach 15 Minuten zu einem Reduktionsfaktor von RF >7,0 führt. Diese Verbesserung ist aufgrund der Einzelergebnisse sehr unerwartet.

Überraschend ist in diesem Zusammenhang auch, dass eine Erhöhung des Gehalts an Natriumbenzoat von 6% auf 13% in Gegenwart von 15% Propionsäure zu einer deutlichen Wirksamkeitssteigerung gegenüber *Staphylococcus aureus* führt.

Beispiel 9, das bereits nach 5 Minuten Einwirkzeit eine maximale Keimreduktion an *Staphylococcus aureus* erzielt, belegt, dass durch Erhöhung der Prüfkonzentrationen auch deutlich schnellere Einwirkzeiten erzielt werden können. Darüber hinaus zeigt Rezeptur 16, bestehend aus je 15% Essigsäure und Propionsäure sowie 13% Natriumbenzoat, dass eine 5,5%ige Anwendungskonzentration bereits nach 2 Minuten Einwirkzeit ausreichende Wirksamkeit gegenüber *Candida albicans* und Staphylococcus areus erzielen kann. Zudem zeigt diese Rezeptur, dass durch die Verwendung der entsprechenden Säuresalze eine gute Regulierung des pH Werts genutzt werden kann und die antimikrobielle Wirksamkeit dennoch erhalten bleibt.

Fazit: Es konnte gezeigt werden, dass synergistische Zusammensetzungen mit organischen Säuren möglich sind, wobei die besten antimikrobiellen Wirksamkeiten bei Zusammensetzungen mit mind. drei Komponenten erhalten werden.

Es ist für den Fachmann aufgrund der zitierten Literatur nicht ersichtlich gewesen, dass mittels der genannten

**EP 3 337 320 B1**

Säuren und Konzentrationen, umfassend und ausreichend wirksame Desinfektionsmittel hergestellt werden können. Besonders überraschend ist hierbei, die Wirksamkeit gegen die oftmals bei Desinfektionsmitteln limitierenden Keime: *Mycobacterium terrae, Candida albicans* und *Staphylococcus aureus.*

**Patentansprüche**

1. Desinfektionsmittelkonzentrat zur Herstellung eines Desinfektionsmittels zur Desinfektion unbelebter Oberflächen, **dadurch gekennzeichnet, dass**

   das Desinfektionsmittelkonzentrat besteht aus

   - 15-45 Gew.-% mind. zweier organischen Säuren, ausgewählt aus Essigsäure, Propionsäure, Milchsäure oder einer Kombination dieser,
   - 6-13 Gew.-% Natriumbenzoat
   - Hilfsstoffen, umfassend Lösungsvermittler ausgewählt aus Propylenglykol, Monoethylenglykol, Methylcarbitol, Butylcarbitol, Hexylcarbitol oder einer Kombination aus Propylenglykol und Hexylcarbitol und
   - Wasser,

   wobei sich die Komponenten zu 100 Gew.-% ergänzen und
   wobei das Desinfektionsmittelkonzentrat als antimikrobiellen Wirkstoff folgende Kombinationen organischer Säuren enthält, wobei keine weiteren organischen Säuren enthalten sind:

   Kombination A: Propionsäure, Milchsäure, Natriumbenzoat
   Kombination D: Essigsäure, Milchsäure, Natriumbenzoat
   Kombination E: Propionsäure, Milchsäure, Essigsäure, Natriumbenzoat.

2. Desinfektionsmittelkonzentrat gemäß Patentanspruch 1, **dadurch gekennzeichnet, dass** das Desinfektionsmittel einen pH-Wert von 1,0 bis 7,0, bevorzugt 2,0 - 6,0 hat.

3. Nicht-therapeutische Verwendung des Desinfektionsmittelkonzentrats gemäß einem der Ansprüche 1 oder 2 zur Desinfektion von unbelebten Oberflächen, insbesondere zur Abtötung von Hefen, insbesondere von Candida albicans, und/oder Abtötung von Bakterien, insbesondere von Staphylococcus aureus.

4. Trägermaterial, vorzugsweise Tuch, das vorgetränkt ist mit einem Desinfektionsmittelkonzentrat gemäß einem der Ansprüche 1 oder 2.

5. Verfahren zur Herstellung eines wässrigen Desinfektionsmittels durch Verdünnung eines Desinfektionsmittelkonzentrats gemäß einem der Patentansprüche 1 oder 2 mit Wasser.

**Claims**

1. Disinfectant concentrate for the preparation of a disinfectant for the disinfection of inanimate surfaces, **characterized in that**

   the disinfectant concentrate consists of

   - 15-45% by weight of at least two organic acids selected from acetic acid, propionic acid, lactic acid or a combination thereof,
   - 6-13% by weight sodium benzoate,
   - auxiliaries comprising solubilizers selected from propylene glycol, monoethylene glycol, butylcarbitol, hexylcarbitol or a combination of propylene glycol and hexylcarbitol, and
   - water,

   where the components add up to 100 % by weight and
   wherein the disinfectant concentrate contains the following combinations of organic acids as the antimicrobial active ingredient, with no other organic acids being present:

**19**

Combination A: Propionic acid, lactic acid, sodium benzoate,
Combination D: Acetic acid, lactic acid, sodium benzoate,
Combination E: Propionic acid, lactic acid, acetic acid, sodium benzoate.

2. Disinfectant concentrate according to claim 1, **characterized in that** the disinfectant has a pH value of 1.0 to 7.0, preferably 2.0 - 6.0.

3. Non-therapeutic use of the disinfectant concentrate according to one of claims 1 or 2 for disinfecting inanimate surfaces, in particular for killing yeasts, in particular Candida albicans, and/or killing bacteria, in particular Staphylococcus aureus.

4. Carrier material, preferably cloth, which is pre-impregnated with a disinfectant concentrate according to one of claims 1 or 2.

5. A process for the preparation of an aqueous disinfectant by diluting a disinfectant concentrate according to any one of claims 1 or 2 with water.

**Revendications**

1. Concentré désinfectant pour la fabrication d'un désinfectant destiné à la désinfection de surfaces inanimées, **caractérisé en ce que** le concentré désinfectant est constitué

- de 15 à 45 % en poids d'au moins deux acides organiques choisis parmi l'acide acétique, l'acide propionique, l'acide lactique ou une combinaison de ceux-ci,
- de 6 à 13 % en poids de benzoate de sodium,
- d'adjuvants comprenant des promoteurs d'adhérence choisis parmi le propylèneglycol, le monoéthylèneglycol, le méthylcarbitol, le butylcarbitol, l'hexylcarbitol ou une combinaison de propylèneglycol et d'hexylcarbitol, et
- d'eau,
les composants se complétant à 100 % en poids, et
le concentré désinfectant contenant comme matière active antimicrobienne les combinaisons suivantes d'acides organiques, aucun autre acide organique n'y étant contenu :

combinaison A : acide propionique, acide lactique, benzoate de sodium
combinaison D : acide acétique, acide lactique, benzoate de sodium
combinaison E : acide propionique, acide lactique, acide acétique, benzoate de sodium.

2. Concentré désinfectant selon la revendication 1, **caractérisé en ce que** le désinfectant a un pH de 1,0 à 7,0, de préférence de 2,0 à 6,0.

3. Utilisation non thérapeutique du concentré désinfectant selon l'une des revendications 1 ou 2, pour la désinfection de surfaces inanimées, en particulier pour tuer des levures, en particulier *Candida albicans,* et/ou tuer des bactéries, en particulier *Staphylococcus aureus.*

4. Matériau support, de préférence lingette, qui est préimprégné d'un concentré désinfectant selon l'une des revendications 1 ou 2.

5. Procédé de fabrication d'un désinfectant aqueux, par dilution à l'eau d'un concentré désinfectant selon l'une des revendications 1 ou 2.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009155931 A1
- WO 2015036433 A1
- EP 0588912 B1
- EP 1110452 A1

**In der Beschreibung aufgeführte Nicht-Patentliteratur**

- Wallhäußers Praxis der Sterilisation, Desinfektion, Antiseptik und Konservierung. **KRAMER, AXEL** ; **ASSADIAN, OJAN**. Qualitätssicherung der Hygiene in Industrie, Pharmazie und Medizin. Georg Thieme Verlag, 2008, 693-694
- **S.BLOCK**. *Disinfection, Sterilisation, and Preservation*, vol. 4, 807
- **WALHÄUßERS**. *Praxis der Sterilisation, Desinfektion, Antiseptik und Konservierung*, 700